# EUROPÄISCHE PATENTSCHRIFT

(11) **EP 1 591 800 B1**
(45) Veröffentlichungstag und Bekanntmachung des Hinweises auf die Patenterteilung: **06.01.2010**
(21) Anmeldenummer: 05405311.1
(22) Anmeldetag: 22.04.2005
(51) Int. Cl.: G01S 1/68

(54) **Verfahren zur Zuordnung von Signalen eines Langwellensenders**
Methode for classifying signals from a long wave transmitter
Méthode de classification des signaux d'un émetteur d'ondes longues

(30) Priorität: 28.04.2004 CH 7472004
(43) Veröffentlichungstag der Anmeldung: 02.11.2005
(73) Patentinhaber: Mammut Sports Group AG, 5703 Seon (CH)
(72) Erfinder: Meier, Felix, 8193 Eglisau (CH); Zurkirch, Willy, 8196 Wil/ZH (CH)
(74) Vertreter: Rüfenacht, Philipp Michael

(56) Entgegenhaltungen:
- WO-A-02/077943
- DE-A1- 3 046 895
- FR-A- 2 654 632

## Beschreibung

Die Erfindung bezieht sich auf ein tragbares Suchgerät zur Ortung von in Lawinen verschütteten Personen, welches zusätzlich mit Mitteln zur Identifikation der verschütteten Sender versehen ist.

Tragbare Suchgeräte zur Ortung von in Lawinen verschütteten Personen, im folgenden Lawinenverschütteten- Suchgeräte oder kurz LVS genannt, gehören heute zur Grundausrüstung der Bergsteiger, Snowboarder und Skifahrer, welche sich abseits gesicherter Pisten bewegen. Derartige Geräte sind beispielsweise in den Patentschriften US6484021 und JP2003198389 beschrieben. Ein LVS befindet sich normalerweise im Sendemodus, es wird in periodischen Abständen ein kurzes Signal ausgesendet. Im Falle eines Lawinenniederganges können die nicht verschütteten Personen ihr LVS in einen Empfangsmodus umschalten. In dieser Betriebsart können die verschütteten Sender, und damit die Personen, mittels Peilverfahren geortet werden. Die von den Sendern abgestrahlten Langwellen-Signale tragen aber keine Identifikationsmerkmale, da die Norm EN 300 718 keine Modulation des Sendesignals zulässt. In vielen Fällen sind bei einem Lawinenunfall mehrere Personen verschüttet. Es stellt sich dann das Problem, die empfangen Signale der verschiedenen Sender zu identifizieren, damit gezielt nach einem einzelnen Sender gesucht werden kann. Die gezielte Suche nach einem einzelnen Sender hat einen wesentlichen Einfluss auf die Dauer der Suchaktion. Die Dauer wiederum ist wesentlich für die Überlebenswahrscheinlichkeit der verschütteten Personen. Diese nimmt nämlich mit zunehmender Dauer der Verschüttungszeit rapide ab.

Die DE 30 46 895 A1 (Gerald Kampel) offenbart ein Verschüttetensuchgerät insbesondere zur Suche nach Lawinenverschütteten, welches mit zwei Sendern und Empfängern ausgerüstet ist. Je ein Sender und Empfänger sendet und empfängt auf einer der Frequenzen 2.275 kHz und 457 kHz. Dies sind laut dieser Druckschrift die beiden insbesondere in den Alpenländern bevorzugten Suchfrequenzen, die von dem Suchgerät gleichzeitig verwendet werden können, um Kompatibilität mit einer möglichst grossen Anzahl von Such- bzw. Empfangsgeräten zu erreichen. Das Signal der Frequenz 457 kHz wird von einem Modulator moduliert, sodass ein Tonfrequenzsignal abgegeben wird, welches zeitverzögert zum Signal der Frequenz 2.275 kHz ausgesendet wird. Die beiden Frequenzen bilden einen Sendezyklus, der als Doppelton hörbar ist.

Aufgabe der Erfindung ist es, den Personen, welche mit einem LVS im Empfangsmodus nach verschütteten Sendern suchen, zusätzliche Informationen zur Verfügung zu stellen, welche es erlauben, aus einer Vielzahl von empfangenen Langwellen-Signalen nur diejenigen, welche von einem bestimmten Sender stammen, für das Peilverfahren auszuwerten.

In der Patentschrift JP2003198389 wird ein Lösungsansatz beschrieben, bei welchem das Signal eines ersten Senders, welcher auf der international für LVS genormten Langwellenfrequenz von 457 kHz arbeitet, in der Amplitude moduliert wird, um eine Identifikations- Information zu übertragen. Dieser Ansatz kann mindestens in den Ländern der Europäischen Union und weiteren, dem European Telecommunication Standards Institute angeschlossenen Ländern, nicht zur Anwendung kommen, da die harmonisierte und dem Artikel 3.3e der RTTE - Direktive unterstellte EN 300 718 zwingend vorschreibt, dass das Langwellen-Signal nicht moduliert werden darf.

Diese Aufgabe wird, ausgehend von einem herkömmlichen Lawinenverschütteten-Suchgerät, dadurch gelöst, dass dieses Gerät mit einem zweiten Sender versehen wird, welcher auf einer frei zugänglichen Frequenz arbeitet, welche aufgrund der Zulassungsbestimmungen moduliert werden darf, und dass dieser zweite Sender ein Signal aussendet, welches in einer festen zeitlichen Beziehung steht zum Langwellen-Signal des ersten Senders und für jeden Sender einmalige Merkmale enthält, und dadurch, dass jedes LVS auch einen Empfänger für die Signale dieses zweiten Senders enthält, welcher die einmaligen Merkmale der Sender dem Benutzer derart zur Darstellung bringt, dass er damit ein einzelnes Langwellen-Signal eines ersten Senders zur Peilung verwenden kann.

Weitere Ausgestaltungen der Erfindung ergeben sich aus den Unteransprüchen.

Für die Übertragung von codierten Identifikationen, beispielsweise einer einmaligen Nummer, über Funkstrecken sind sehr viele Verfahren bekannt. Sie beruhen alle darauf, dass das ausgesendete Signal in einem seiner Parameter Amplitude, Frequenz oder Phase in Abhängigkeit von der zu übertragenden Information verändert wird. Ein Empfänger kann diese Veränderungen messen und aufgrund einer Konvention mit dem Sender aus den gemessenen Veränderungen auf die übertragene Information, im konkreten Fall auf die Identifikationscodes, schliessen. Derartige Verfahren werden beispielsweise für die Steuerung von Garagetoren oder von Motorfahrzeug - Verriegelungen angewendet.

Damit der Identifikationscode einem Langwellen-Signal zugeordnet werden kann, muss die Aussendung des Identifikationscodes in einer bestimmten zeitlichen Beziehung zum Langwellen-Signal stehen, beispielsweise, indem immer gleichzeitig mit dem Beginn der Aussendung eines Langwellen-Signales ein Identifikationscode ausgesendet wird.

Im empfangenden Gerät kann die Anzahl der verschiedenen erkannten Identifikationscodes dem Benutzer mit geeigneten Mitteln, zum Beispiel mittels Symbolen auf einer Anzeige, zur Kenntnis gebracht werden. Der Benutzer wiederum kann das empfangende Gerät dazu veranlassen, nur diejenigen Langwellen-Signale eines ersten Senders, welche in einer bestimmten zeitlichen Beziehung zu einem der erkannten Identifikationscodes stehen, für die Peilung auszuwerten.

Für die Auswahl der Signale eines bestimmten ersten Senders können verschiedene Kriterien zur Anwendung kommen. Wichtig ist es, dass die Anzahl der Sender so rasch wie möglich reduziert wird, um die weitere Suche zu vereinfachen. Der einfachste Ansatz besteht darin, einfach irgend einen der Sender zu wählen. Wesentlich wirkunsvoller ist es aber, den Sender mit dem stärksten Langwellen-Signal auszuwählen, da dieser Sender die kürzeste Entfernung vom Empfänger aufweist und dadurch am schnellsten eliminiert werden kann.

Die Erfindung wird nachfolgend anhand eines Ausführungsbeispiels näher erläutert. In der Zeichnung zeigen:
- Figur 1:: Ein Blockschaltbild eines LVS, welches mit einem zweiten Sender und einem zweiten Empfänger ausgerüstet ist.
- Figur 2:: Die zeitliche Beziehung zwischen den Signalen des ersten und des zweiten Senders.

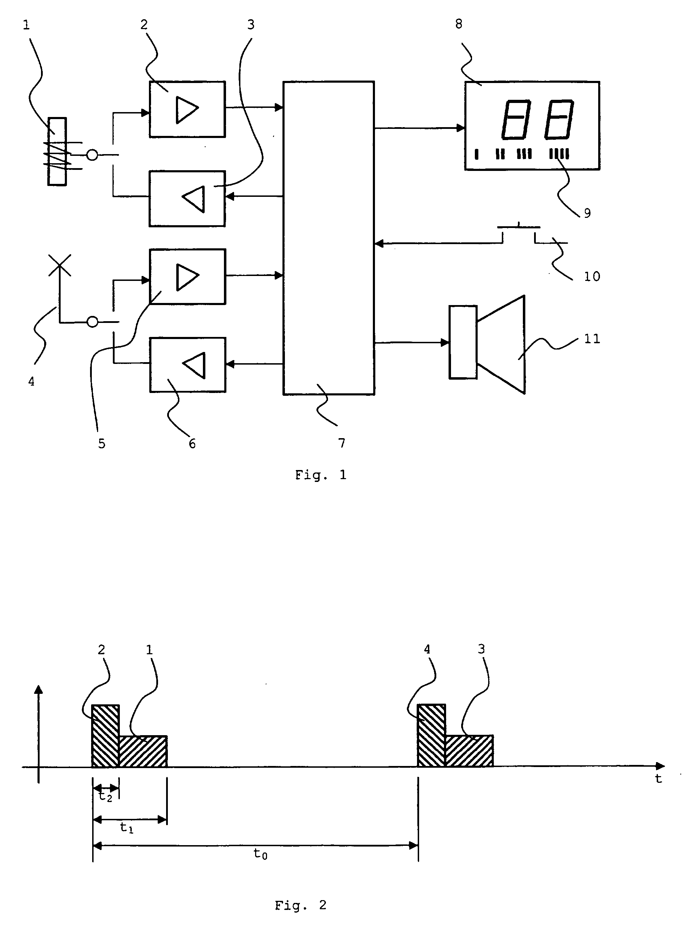

Figur 1 zeigt das Blockschaltbild eines LVS, welches mit einem zweiten Sender und einem zweiten Empfänger ausgerüstet ist.

Ist das Gerät im Sendemodus, so werden die Langwellen-Signale des ersten Senders 3 der Antenne 1 zugeführt. Die Signale des zweiten Senders 6 mit den von der Steuerelektronik 7 aufgeprägten Indentifikationscodes werden der dafür vorgesehenen Antenne 4 zugeführt. Die Signale beider Sender werden gleichzeitig aktiviert, können aber von unterschiedlicher Dauer sein.

Im Empfangsmodus wird das Langwellen-Signal eines ersten Senders für die Peilung über die Antenne 1 dem Empfänger 2 zugeführt. Die Steuerelektronik 7 erfasst die für die Peilung notwendigen Informationen, insbesondere die Signalstärke. Aufgrund der Signalstärke wird die Distanz zum Sender geschätzt und mittels einer Ziffernanzeige 8 dem Benutzer zur Kenntnis gebracht. Es sind auch neuere Geräte im Gebrauch, welche das Signal eines ersten Senders mittels zweier orthogonaler Antennen erfassen und auswerten. In diesem Falle kann nebst der Signalstärke der Signale von den zwei Antennen des ersten Empfängers auch die gegenseitige Phasenlage der Signale von den zwei Antennen des ersten Empfängers ausgewertet werden. Dies erlaubt es, zusätzlich zur Schätzung der Distanz auch eine Angabe über die Richtung der Feldlinien des vom ersten Empfänger erfassten Signales zu machen.

Das Signal des zum ersten Sender gehörenden zweiten Senders wird über die Antenne 4 dem Empfänger 5 zugeführt. Die Steuerelektronik 7 wertet den Identifikationscode aus und zeigt dem Benutzer mittels der Balkensymbole 9 die Anzahl der verschiedenen empfangenen Identifikationscodes an.

Mittels eines Bedienelementes 9, beispielsweise einer Taste, veranlasst der Benutzer die Steuerelektronik 7 dazu, einen bestimmten Identifikationscode auszuwählen. Vorteilhaft ist die Auswahl aufgrund der Signalstärke des gleichzeitig empfangenen Signales eines ersten Senders. Wird über den Identifikationscode vom zweiten Sender der erste Sender mit dem stärksten Signal ausgewählt, so ergibt sich in der Regel die kürzeste Zeit zum Auffinden und Eliminieren des ersten Senders durch Ausschalten.

Der Schallgeber 11 kann dazu verwendet werden, dem Benutzer das empfangene Peilsignal akustisch anzuzeigen. Dabei kann alternativ nur das Signal vom ausgewählten ersten Sender ausgegeben werden oder aber die Signale aller empfangenen ersten Sender. Die Auswahl der akustischen Signale kann durch den Benutzer nach seinen Vorlieben erfolgen, oder aber durch die Steuerelektronik aufgrund der Auswahl eines Identifikationscodes durch den Benutzer.

Figur 2 zeigt den zeitlichen Ablauf der Aussendungen. Beide Sender starten ihr Signal gleichzeitig in Intervallen von t₀ Sekunden. Ein typischer Wert für t₀ ist eine Sekunde. Die Dauer der Signale ist unterschiedlich. Die Dauer des Langwellen-Signals t₁ des ersten Senders (1, 3) ist durch die Norm EN 300 718 festgelegt, sie beträgt normalerweise ca. 0.100 Sekunden. Die Dauer des Signales des zweiten Senders (2, 4) t₂ ist abhängig von der Länge des Identifikationscodes und von der gewählten Symbolrate. Typische Werte sind 64 Bit für den Indentifikationscode inklusive Synchronisationsinformation und 2000 Symbole pro Sekunde für die Symbolrate. Damit wird t₂ ca. 0.032 Sekunden.

Für die eindeutige Identifikation der Sender ist es notwendig, dass nie zwei Sender den gleichen Identifikationscode verwenden. Dies kann dadurch erreicht werden, dass der Identifikationscode aus zwei Teilen zusammengesetzt wird, nämlich aus einer Hersteller-Kennung und aus einer fortlaufenden Nummer pro Hersteller. Es genügt dann eine Absprache unter den Herstellern über die verwendete Hersteller-Kennung, um zu gewährleisten, dass weltweit keine zwei LVS den gleichen Identifikationscode verwenden.

## Patentansprüche

1. Tragbares Suchgerät zur Ortung von in Lawinen verschütteten Personen, wobei das Suchgerät ausgerüstet ist mit
a) einem ersten Sender zum Aussenden eines Langwellensignals und einem ersten Empfänger zum Empfang eines solchen Langwellensignals eines anderen Suchgeräts
b) sowie einem zweiten Sender zum Aussenden eines mit einem Identifikationscode modulierten Signals und einem zweiten Empfänger zum Empfang eines solchen mit einem Identifikationscode modulierten Signals des anderen Suchgeräts;
**dadurch gekennzeichnet, dass**
c) zur Zuordnung des Identifikationscodes des anderen Suchgeräts zu dem Langwellensignal des anderen Suchgeräts die Aussendung des Identifikationscodes durch den zweiten Sender in einer festen zeitlichen Beziehung zur Aussendung des Langwellensignals durch den ersten Sender steht und dass
d) mit dem tragbaren Suchgerät einer der empfangenen Identifikationscodes auswählbar und zur Ortung der verschütteten Person nur dasjenige Langwellensignal auswertbar ist, welches in der festen zeitlichen Beziehung zu dem mit dem ausgewählten Identifikationscode modulierten Signal steht.

2. Suchgerät nach Anspruch 1, **dadurch gekennzeichnet, dass** der von einem Gerät ausgesendete Identifikationscode einmalig ist.

3. Suchgerät nach Anspruch 1, **dadurch gekennzeichnet, dass** mindestens die Anzahl der verschiedenen empfangenen Identifikationscodes dem Benutzer zur Kenntnis gebracht wird.

4. Suchgerät nach Anspruch 1, **dadurch gekennzeichnet, dass** der Benutzer den Identifikationscode desjenigen zweiten Senders auswählen kann, dessen erster Sender das stärkste Langwellensignal aufweist.

5. Suchgerät nach Anspruch 1, **dadurch gekennzeichnet, dass** nach der Auswahl eines Identifikationscodes durch den Benutzer nur noch die Langwellensignale des zum ausgewählten Identifikationscode eines zweiten Senders gehörenden ersten Senders zur Peilung ausgewertet werden.

6. Suchgerät nach Anspruch 1, **dadurch gekennzeichnet, dass** der zweite Sender und der zweite Empfänger auf einer Frequenz arbeiten, welche frei benutzbar ist.

7. Verfahren zur Ortung von in Lawinen verschütteten Personen mittels eines Suchgeräts, wobei
a) mit einem ersten Sender des Suchgeräts ein Langwellensignal ausgesendet und mit einem ersten Empfänger des Suchgeräts ein solches Langwellensignal eines anderen Suchgeräts empfangen wird
b) sowie mit einem zweiten Sender des Suchgeräts ein mit einem Identifikationscode moduliertes Signals ausgesendet und mit einem zweiten Empfänger ein solches mit einem Identifikationscode moduliertes Signal des anderen Suchgeräts empfangen wird,
**dadurch gekennzeichnet, dass**
c) zur Zuordnung des Identifikationscodes zu dem Langwellensignal jedes Suchgeräts das mit dem Identifikationscode modulierte Signal mit dem zweiten Sender in einer festen zeitlichen Beziehung zur Aussendung des Langwellensignals durch den ersten Sender ausgesendet wird, dass
d) ein mit einem Identifikationscode moduliertes Signal des zweiten Senders eines anderen Suchgeräts aus allen empfangenen Signalen ausgewählt wird und dass
e) nur dasjenige Langwellensignal für die Ortung des anderen Suchgeräts ausgewertet wird, welches in der festen zeitlichen Beziehung zu dem ausgewählten mit einem Identifikationscode modulierten Signal steht.

## Claims

1. Portable detector for locating people buried in avalanches, wherein the detector is equipped with
a) a first transmitter for emitting a longwave signal and a first receiver for receiving such a longwave signal from another detector and with
b) a second transmitter for emitting a signal modulated by means of an identification code and with a second receiver for receiving such a signal modulated by means of an identification code from the other detector;
**characterized in that**
c) for the purpose of associating the identification code from the other detector with the longwave signal from the other detector, the emission of the identification code by the second transmitter is in a fixed chronological relationship with the emission of the longwave signal by the first transmitter, and **in that**
d) the portable detector can be used to select one of the received identification codes and, for the purpose of locating the buried person, to evaluate only that longwave signal which is in the fixed chronological relationship with the signal modulated by means of the selected identification code.

2. Detector according to Claim 1, **characterized in that** the identification code emitted by an appliance is unique.

3. Detector according to Claim 1, **characterized in that** at least the number of different received identification codes is brought to the knowledge of the user.

4. Detector according to Claim 1, **characterized in that** the user can select the identification code from that second transmitter whose first transmitter has the strongest longwave signal.

5. Detector according to Claim 1, **characterized in that** following the selection of an identification code by the user, only the longwave signals from the first transmitter associated with the selected identification code from a second transmitter are then evaluated for position-finding purposes.

6. Detector according to Claim 1, **characterized in that** the second transmitter and the second receiver operate at a frequency which can be used freely.

7. Method for locating people buried in avalanches using a detector, wherein
a) a first transmitter in the detector emits a longwave signal and a first receiver in the detector receives such a longwave signal from another detector
b) and a second transmitter in the detector is used to emit a signal modulated by means of an identification code and a second receiver is used to receive such a signal modulated by means of an identification code from the other detector,
**characterized in that**
c) for the purpose of associating the identification code with the longwave signal from each detector, the signal modulated by means of the identification code is emitted by means of the second transmitter in a fixed chronological relationship with the emission of the longwave signal by the first transmitter, **in that**
d) a signal modulated by means of an identification code from the second transmitter in another detector is selected from all received signals, and **in that**
e) only that longwave signal which is in the fixed chronological relationship with the selected signal modulated by means of an identification code is evaluated for the purpose of locating the other detector.

## Revendications

1. Appareil portable de recherche destiné à localiser des personnes enfouies dans des avalanches, l'appareil de recherche étant équipé :
a) d'un premier émetteur destiné à émettre un signal à longue longueur d'onde et un premier récepteur destiné à recevoir d'un autre appareil de recherche un tel signal à longue longueur d'onde,
b) ainsi que d'un deuxième émetteur destiné à émettre un signal modulé par un code d'identification et que d'un deuxième récepteur destiné à recevoir de l'autre appareil de recherche un signal modulé par un code d'identification,
**caractérisé en ce que**
c) pour associer le code d'identification de l'autre appareil de recherche au signal à longue longueur d'onde de l'autre appareil de recherche, l'émission du code d'identification par le deuxième émetteur est en rapport temporel fixe par rapport à l'émission du signal à longue longueur d'onde par le premier émetteur et
d) **en ce que** l'appareil portable de recherche peut sélectionner un des codes d'identification reçus et **en ce que** seul le signal à longue longueur d'onde qui présente le rapport temporel fixe par rapport au signal modulé par le code d'identification sélectionné peut être évalué pour localiser la personne enfouie.

2. Appareil de recherche selon la revendication 1, **caractérisé en ce que** le code d'identification envoyé par un appareil est unique.

3. Appareil de recherche selon la revendication 1, **caractérisé en ce qu'**au moins le nombre des différents codes d'identification reçus est porté à la connaissance de l'utilisateur.

4. Appareil de recherche selon la revendication 1, **caractérisé en ce que** l'utilisateur peut sélectionner le code d'identification du deuxième émetteur dont le premier émetteur présente le plus fort signal à longue longueur d'onde.

5. Appareil de recherche selon la revendication 1, **caractérisé en ce qu'**après la sélection d'un code d'identification par l'utilisateur, seuls les signaux à longue longueur d'onde du premier émetteur qui correspondent au code d'identification sélectionné d'un deuxième émetteur sont évalués pour la localisation.

6. Appareil de recherche selon la revendication 1, **caractérisé en ce que** le deuxième émetteur et le deuxième récepteur travaillent sur une fréquence utilisable librement.

7. Procédé de localisation de personnes enfouies dans des avalanches au moyen d'un appareil de recherche, dans lequel :
a) un signal à longue longueur d'onde est émis par un premier émetteur de l'appareil de recherche et un tel signal à longue longueur d'onde d'un autre appareil de recherche est reçu par un premier récepteur de l'appareil de recherche,
b) un signal modulé par un code d'identification est émis par un deuxième émetteur de l'appareil de recherche et un tel signal modulé par un code d'identification du deuxième appareil de recherche est reçu par un deuxième récepteur,
**caractérisé en ce que**
c) pour associer le code d'identification au signal à longue longueur d'onde de chaque appareil de recherche, le signal modulé par le code d'identification dans le deuxième émetteur est émis par le premier émetteur dans un rapport temporel fixe par rapport à l'émission du signal à longue longueur d'onde,
d) **en ce qu'**un signal modulé par un code d'identification dans le deuxième émetteur d'un autre appareil de recherche est sélectionné parmi tous les signaux reçus et
e) **en ce que** seul le signal à longue longueur d'onde qui présente le rapport temporel fixe par rapport au signal modulé par un code d'identification et sélectionné est évalué pour localiser l'autre appareil de recherche.
